# EUROPÄISCHE PATENTSCHRIFT

(11) **EP 0 594 035 B1**
(45) Veröffentlichungstag und Bekanntmachung des Hinweises auf die Patenterteilung: **08.01.1997**
(21) Anmeldenummer: 93116472.7
(22) Anmeldetag: 12.10.1993
(51) Int. Cl.: A01M 3/00

(54) **Verfahren und Vorrichtung zur Bekämpfung von Insekten**
Method and device for controlling insects
Procédé et dispositif pour combattre les insects

(30) Priorität: 23.10.1992 DE 4235724; 30.10.1992 DE 4236718
(43) Veröffentlichungstag der Anmeldung: 27.04.1994
(73) Patentinhaber: Naber, Conrad, D-28357 Bremen (DE)
(72) Erfinder: Naber, Conrad, D-28357 Bremen (DE)
(74) Vertreter: Möller, Friedrich, Dipl.-Ing.

(56) Entgegenhaltungen:
- EP-A- 0 348 751
- DE-C- 940 436

## Beschreibung

Die Erfindung betrifft ein Verfahren und eine Vorrichtung zum Bekämpfen von Insekten, vorzugsweise Mücken, Fliegen und dergleichen.

Ein solches Verfahren ist bekannt aus der DE-C-940 436. Bei dieser Vorrichtung wird das Insekt durch Saugluft in die pistolenartige Vorrichtung eingesogen. Anschließend wird das Insekt durch Preßluft in eine zweite Kammer der Vorrichtung geblasen und durch ein innerhalb dieser Kammer angebrachtes Kontaktgift getötet.

Es ist auch bereits bekannt, Insekten mit toxischen Gasen oder fein zerstäubten Flüssigkeiten zu bekämpfen, womit stets eine Umweltbelastung verbunden ist. In geschlossenen Räumen kann die Verwendung derartiger Gifte sogar zu einer Gefährdung der darin befindlichen Menschen führen.

Weiterhin ist seit langem die sogenannten Fliegenklatsche bekannt. Beim Einsatz der Fliegenklatsche kommt es häufig dazu, daß die an einer Wand, auf einer Tischdecke oder dergleichen bekämpften Insekten schwer zu entfernende Flecken hinterlassen. Sehr oft, beispielsweise bei einem gedeckten Tisch, kann die Fliegenklatsche überhaupt nicht eingesetzt werden, da die geringen Abstände zwischen den Tassen, Tellern und dergleichen dies nicht zulassen. Findet sie dennoch Verwendung, kann das Geschirr leicht in Mitleidenschaft gezogen werden.

Schließlich ist es bekannt, Insekten oder dergleichen mit Hilfe eines Heißluftschwalls zu bekämpfen. Die Insekten werden dabei durch die in dem Luftschwall gespeicherte thermische Energie bekämpft. Dies hat den Nachteil, daß ebenfalls der Heißluft ausgesetzte Gegenstände, wie zum Beispiel Pflanzen, beeinträchtigt bzw. beschädigt werden. Ferner muß durch Zufuhr von Energie die Luft erhitzt werden.

Der Erfindung liegt demgemäß die Aufgabe zugrunde, ein Verfahren und eine Vorrichtung zum Bekämpfen von Insekten, vorzugsweise Mücken, Fliegen und dergleichen, zu schaffen, die eine wirkungsvolle, energiesparende Bekämpfung ermöglichen und Umweltbelastungen sowie Verschmutzungen bzw. Beschädigungen ausschließen.

Diese Aufgabe wird durch ein Verfahren mit den Maßnahmen des Anspruchs 1 gelöst. Die Insekten werden plötzlich einem im wesentlichen erhöhten Gasdruck ausgesetzt, nämlich dem endlichen Strahl des unter Druck stehenden und/oder komprimierten Gases. Überraschenderweise können die Insekten allein hierdurch bekämpft werden. Sie können somit ohne den Einsatz umweltschädlicher toxischer Stoffe und ohne Beeinträchtigung irgendwelcher Gegenstände, insbesondere der Wohneinrichtung, bekämpft werden. Bekämpfen im Sinne der Erfindung bedeutet töten oder betäuben.

Die Luft des Luftdruckstoßes bzw. -impulses besitzt im wesentlichen Umgebungstemperatur. Druckluft mit Umgebungstemperatur kann ohne großen Aufwand bereitgestellt werden. Ein Aufheizen der Luft ist nicht erforderlich. Das Bekämpfen der Insekten erfolgt allein durch die in der Druckluft gespeicherte mechanische Energie, die sich im höheren Druckniveau des Luftdruckstoßes gegenüber der Umgebungsluft äußert. Aus der Verwendung von Druckluft mit Umgebungstemperatur resultieren vor allem keinerlei Umweltbelastung.

Gemäß einer besonders vorteilhaften Ausgestaltung wird der Druckluftstrahl aus gebündelter Druckluft gebildet und mit diesem werden die Insekten gezielt beschossen, wobei zuerst das Insekt anvisiert und erst dnn der Druckluftstrahl ausgelöst wird. Hierdurch ist die effektive Nutzung der Druckluft möglich, da diese größtenteils für den die Insekten bekämpfenden Impuls eingesetzt wird.

Durch Bündeln bzw. Komprimieren der Druckluft zu dem Druckluftstrahl kann dieser mit einem recht exakt abgrenzbaren Wirkungsbereich versehen werden, innerhalb dessen ein Insekt auch tatsächlich bekämpft wird. Durch die beschriebene Lenkung der Druckluft kann folglich der Wirkungsbereich des Druckluftstrahls an die jeweiligen Bedingungen angepaßt werden. Zur Bekämpfung kleinerer Insekten kann der Wirkungsbereich groß sein. Für größere Insekten muß der Druckluftstrahl dagegen auf einen kleineren Wirkungsbereich konzentriert werden.

Der Wirkungsbereich des Druckluftstrahls, d. h. dessen räumliche Erstreckung und insbesondere seine Länge werden derart fixiert, daß ein sicheres Anvisieren der Insekten mit erforderlicher Trefferfläche möglich ist, ohne daß die Fluchtdistanz der Insekten überschritten wird und diese auffliegen.

Die Aufgabe wird weiterhin gelöst durch eine Vorrichtung mit den Merkmalen des Anspruchs 6. Die Vorrichtung ist einfach aufgebaut und leicht handhabbar, derart, daß Insekten exakt anvisiert und bekämpft werden können. Der Luftkanal des Luftaustritts bzw. der Düse ist dabei derart ausgebildet, daß ein Austritt von Fremdkörpern im Druckluftstrahl ausgeschlossen ist. Hierdurch wird ein Mißbrauch der erfindungsgemäßen Vorrichtung verhindert. Insbesondere wird verhindert, daß Geschosse mit der erfindungsgemäßen Vorrichtung ausgeschleudert werden.

In vorteilhafter Ausgestaltung ist die Druckluftquelle ein mit Druckluft gefüllter Druckbehälter, vorzugsweise eine Druckluftflasche, der ein zum Druckluftaustritt betätigbares Ventil zugeordnet ist. Hierdurch ist es möglich, häufig und auch in schneller Folge Insekten anzuvisieren, durch Betätigung des Ventils den Druckluftaustritt auszulösen und dadurch das Insekt zu bekämpfen. Nachdem die Druckluft verbraucht ist, kann die Druckluftflasche leicht nachgefüllt bzw. ausgetauscht werden.

Gemäß einer weiteren Ausgestaltung ist die Druckluftquelle derart ausgebildet, daß die Druckluft durch einen in einem Zylinder vorschnellenden Kolben erzeugt wird. Hierdurch ist es möglich, die Insekten quasi mit selbst erzeugter Druckluft zu bekämpfen und auf vorgefüllte Druckluftflaschen nicht angewiesen zu sein.

Die Wirkungsweise der Vorrichtungen wird dadurch wesentlich verbessert, daß dem Luftaustritt eine Düse zur Lenkung der Druckluft zu dem Druckluftstrahl zugeordnet ist. Mit dem Druckluftstrahl können die Insekten zum einen gezielter beschossen werden, und zum anderen ist die Verwendung der Druckluft weitestgehend auch für die Bekämpfung der Insekten gewährleistet.

Weitere Merkmale der Erfindung und deren Vorteile ergeben sich aus den übrigen Unteransprüchen und der Beschreibung.

Die Erfindung soll nachfolgend an zwei Ausführungsbeispielen näher erläutert werden. In der zugehörigen Zeichnung zeigen:
- Fig. 1: die Vorderansicht einer Vorrichtung zum Bekämpfen von Insekten schematisch dargestellt,
- Fig. 2: die Vorderansicht einer zweiten Ausführungsform der Vorrichtung schematisch, teilweise und im Schnitt,
- Fig. 3: ein Luftaustritt mit Luftführungskanal schematisch, teilweise und im Schnitt,
- Fig. 4: ein weiteres Ausführungsbeispiel des Luftführungskanals,
- Fig. 5: eine Seitenansicht nach Fig. 4,
- Fig. 6: ein drittes Ausführungsbeispiel des Luftführungskanals,
- Fig. 7: eine Seitenansicht nach Fig. 6, und
- Fig. 8: ein letztes Ausführungsbeispiel des Luftführungskanals.

Die Bekämpfung von Insekten wie Mücken, Fliegen und dergleichen erfolgt, indem diese plötzlich einem veränderten Luftdruck ausgesetzt bzw. kurzfristig mit Druckluft beaufschlagt werden. Die Druckluft besitzt Umgebungstemperatur. Die Insekten werden allein durch Veränderung des Luftdrucks bekämpft. Die Druckluft wird durch Bündelung bzw. Komprimierung derselben zu einem Druckluftstrahl 10 geformt. Hierdurch erhält der Druckluftstrahl 10 einen definierbaren Wirkungsbereich 11 bzw. eine vorbestimmbare räumliche Ausdehnung, innerhalb der er auch tatsächlich im Sinne der Bekämpfung der Insekten wirksam werden kann. Die seitliche Ausdehnung ist so bemessen, daß das Insekt vor der Auslösung des Druckluftstrahls 10 mit ausreichender Genauigkeit anvisiert werden kann. Die Länge des Druckluftstrahls 10 muß größer sein als die Fluchtdistanz der Insekten, so daß diese anvisiert werden können, ohne aufzufliegen. Wenngleich auch die Bekämpfung der Insekten im Fluge möglich ist, ist die Treffergenauigkeit bei sich in relativer Ruhe befindenden Insekten am größten.

Wegen der Ausbildung des Druckluftstrahls 10 mit dem recht scharf abgrenzbaren Wirkungsbereich 11 kann die freigesetzte Druckluft auch überwiegend zur Bekämpfung der Insekten eingesetzt werden. Das unkontrollierte Entweichen der Druckluft in Räume, in denen sie diese Aufgabe mangels des erforderlichen Energiepotentials nicht erfüllen kann, ist weitestgehend ausgeschlossen.

Überraschenderweise hat sich gezeigt, daß die Bekämpfung der Insekten mit dem Druckluftstrahl 10 wirkungsvoll erfolgen kann, ohne daß das Energiepotential desselben so groß sein muß, daß die Insekten quasi zerquetscht werden. Hieraus ergibt sich der Vorteil, daß Flecken, zum Beispiel auf der Tapete, vermieden werden können.

Es reicht aus, den Druckluftstrahl nur zur Betäubung der Insekten einzusetzen. Die Tötung der Insekten kann danach am geeigneten Ort auf herkömmliche Weise geschehen.

Die Druckluft wird vorzugsweise zu dem sich im wesentlichen zylindrisch erstreckenden bzw. leicht konisch erweiternden Druckluftstrahl 10 gebündelt bzw. komprimiert, da hierdurch die freigesetzte Druckluft im Hinblick auf die erforderliche Trefferfläche und Länge des Wirkungsbereichs 11 optimal ausgenutzt werden kann.

Zur Durchführung des Verfahrens findet eine Vorrichtung mit einer als Druckluftflasche 12 ausgebildeten Druckluftquelle Anwendung. Auf einen Anschlußstutzen 13 derselben ist koaxial ein Ventil 14 aufgeschraubt, bei dessen Betätigung Druckluft aus der Druckluftflasche 12 über das Ventil 14 entweichen kann. Zur Betätigung weist das Ventil 14 einen koaxial verschieblichen und druckknopfartig ausgebildeten Abzug 15 auf, der zur Freigabe des Druckluftaustritts gedrückt, also in Richtung der Druckluftflasche 12, verschoben werden muß. Wird der Abzug 15 dagegen nicht betätigt, kann keine Druckluft austreten.

Der Druckluftaustritt aus der Druckluftflasche 12 erfolgt über einen im wesentlichen rechtwinklig zum Ventil 14 und damit zu der Druckluftflasche 12 sich erstreckenden Luftaustritt 16 des Ventils 14. Bei dieser Anordnung ist es sehr gut möglich, mit der in der Hand gehaltenen Druckluftflasche 12 das zu bekämpfende Insekt mit ausreichender Genauigkeit anzuvisieren und durch Betätigung des Abzugs 15 mit dem vorstehend erwähnten Druckluftstrahl 10 zu beschießen.

Zur Lenkung der aus dem Luftaustritt 16 entweichenden Druckluft zu dem Druckluftstrahl 10 ist auf den Luftaustritt 16 eine Düse 17 aufgeschraubt, die als Verstelldüse 18 ausgebildet ist. Die Verstelldüse 18 weist ein fest mit dem Luftaustritt 16 verbundenes Innenteil 19 auf, zu dem zur Verstellung des Druckluftstrahls 10 eine Außenhülle 20 axialverschieblich ist. Die Axialverschiebung erfolgt dadurch, daß die Außenhülle 20 relativ zu dem Innenteil 19 gedreht wird.

Ähnlich so, wie mit einem Verstellmundstück eines Wasserschlauches das Wasser zu einem scharfen, weitreichenden Strahl gebündelt oder aber über eine größere Fläche versprüht werden kann, ist es mittels der Verstelldüse 18 möglich, den Druckluftstrahl 10 entsprechend den jeweiligen Erfordernissen zu verändern und diesen anzupassen. Zur Bekämpfung kleinerer Insekten kann der Wirkungsbereich des Druckluftstrahls 10 so eingestellt werden, daß dieser eine große seitliche Ausdehnung und damit Trefferfläche sowie eine entsprechend geringere Länge aufweist. Sind die zu bekämpfenden Insekten dagegen größer, muß die Druckluft und damit deren Energiepotential auf eine kleinere Trefferfläche konzentriert werden.

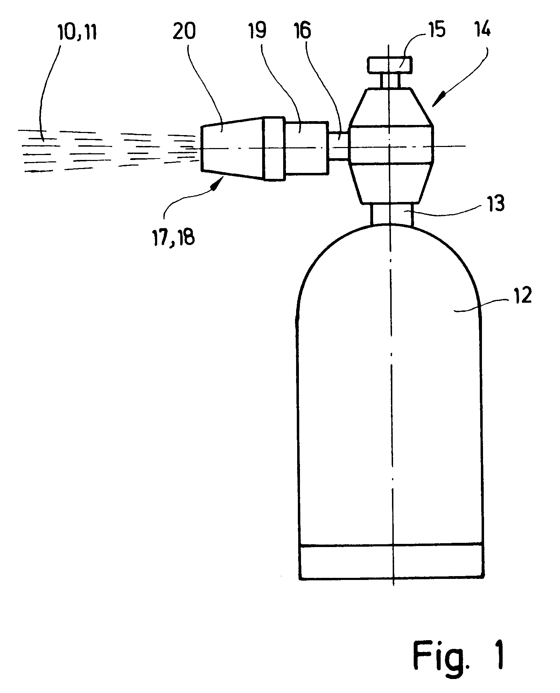

Diese Vorrichtung (Fig. 1) ist in besonderer Weise dazu geeignet, in kurzer Folge eine große Anzahl der Druckluftstrahlen 10 auf Insekten abzuschießen, wobei deren Verwendung praktisch unbegrenzt möglich ist, sofern verbrauchte Druckluftflaschen 12 wieder gefüllt oder gegen gefüllte Druckluftflaschen 12 ausgetauscht werden können.

Die Druckluftflasche 12 kann aber auch zusätzlich mit einem Rückschlagventil versehen sein, so daß mittels einer separaten Luftpumpe Druckluft in der Druckluftflasche 12 erzeugt werden kann. Es ist aber auch möglich, innerhalb der Druckluftflasche 12 selbst eine Luftpumpe zu integrieren und somit das Befüllen bzw. Nachfüllen der Druckluftflasche 12 stets zu gewährleisten.

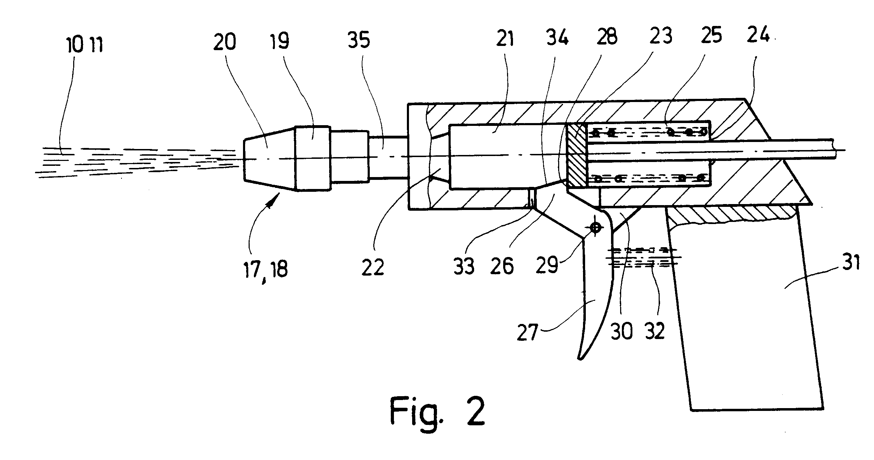

Bei einer anderen Ausführungsform der Vorrichtung ist die Druckluftquelle luftpistolenartig ausgebildet. In einem Zylinder 21 mit einer einseitigen Luftaustrittsöffnung 22 ist ein Kolben 23 axial verschiebbar. Zwischen einer Ringfläche 24 des Zylinders 21, die der Luftaustrittsöffnung 22 gegenüberliegt, und dem Kolben 23 ist eine Druckfeder 25 angeordnet, gegen die der Kolben 23 bis zum Erreichen einer in Fig. 2 dargestellten Halteposition verschiebbar ist. Diese Verschiebung des Kolbens 23 geht einher mit dem Spannen der Druckfeder 25, wobei die dazu vorgesehene Spanneinrichtung nicht näher beschrieben ist.

In der Halteposition wird der Kolben 23 mittels einer Haltenase 26 eines Abzugs 27 oder genauer einer Haltefläche 28 der Haltenase 26 gehalten. Der Abzug 27 ist um eine Achse 29 eines Lagerbocks 30, der an dem Zylinder 21 angeordnet ist, schwenkbeweglich. Er ist mit einer gegen ein Griffelement 31 abgestützten Druckfeder 32 derart gehalten, daß die Haltenase 26 stets durch eine Ausnehmung 33 in den Zylinder 21 hineinreicht und somit der Kolben 23 arretiert ist.

Unmittelbar bevor der Kolben 23 bei seiner Bewegung in Richtung der Halteposition diese erreicht, fährt er gegen eine Anlauffläche 34 der Haltenase 26, wodurch der Abzug 27 entgegen des Uhrzeigersinns und gegen die Druckfeder 32 verschwenkt wird, bis die Halteposition erreicht ist und die Haltenase 26 mit der Haltefläche 28 einrasten kann.

Wird in der in Fig. 2 dargestellten Halteposition der Abzug 27 betätigt und dadurch die Haltenase 26 aus dem Zylinder 21 herausgeschwenkt, so schnellt der Kolben 23 infolge der Wirkung der sich entspannenden Druckfeder 25 in Richtung der Luftaustrittsöffnung 22 vor und die derart erzeugte Druckluft entweicht über die Luftaustrittsöffnung 22 bzw. einen Luftaustritt 35 aus dem Zylinder 21.

Auch hierbei ist auf den Luftaustritt 35 die Verstelldüse 18 aufgeschraubt, so daß die im Zylinder 21 erzeugte Druckluft in den Druckluftstrahl 10 umgelenkt wird. Die dadurch erreichbaren Wirkungen entsprechen denen, die im Zusammenhang mit der zuerst beschriebenen Vorrichtung bereits erläutert wurden. Mit der zuletzt beschriebenen Vorrichtung ist es allerdings möglich, Insekten mit dem Druckluftstahl 10 zu bekämpfen, ohne daß zuvor erzeugte Druckluft bereitgestellt werden muß. Diese Vorrichtung eignet sich deshalb insbesondere zur Verwendung auf Reisen.

Zur Vermeidung einer mißbräuchlichen Benutzung als Druckluftwaffe ist ein Luftführungskanal 36, 38, 41 des Luftaustritts 16 bzw. 35 derart ausgebildet, daß der Austritt von Fremdkörpern zusammen mit dem Druckluftstrahl 10 stets ausgeschlossen ist.

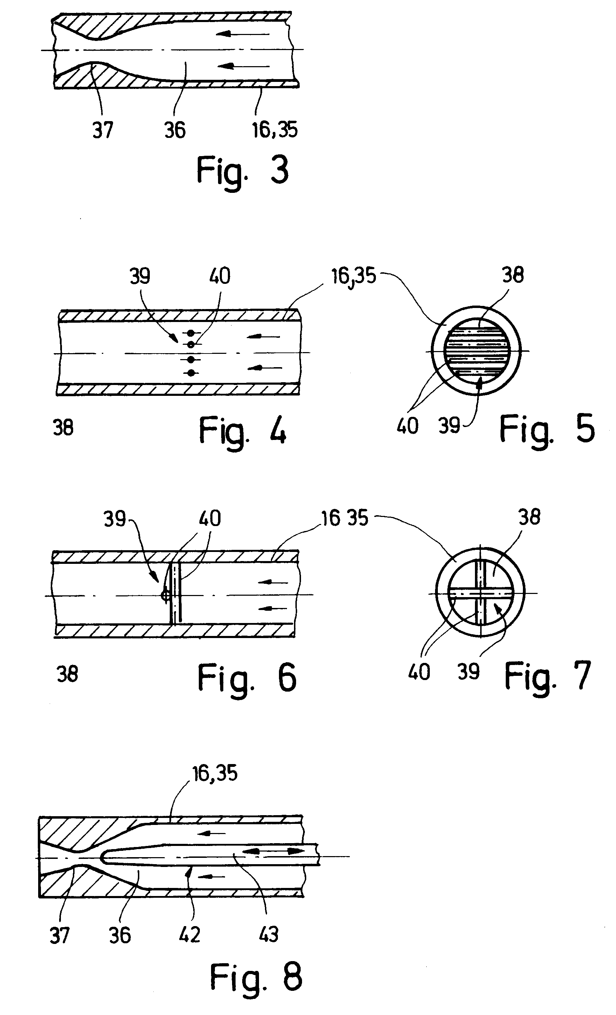

Hierzu ist der Luftführungskanal 36 mit einer partiellen Einschnürung 37 versehen, an der alle Fremdkörper größeren Durchmessers gehalten würden, so daß ein Abschießen von Kugeln oder dergleichen ausgeschlossen ist (Fig. 3).

Ein Luftführungskanal 38 ist zu diesem Zwecke mit einer Verstrebung 39 aus parallelen Streben 40 (Fig. 4 und 5) oder sich kreuzenden Streben 40 (Fig. 6 und 7) versehen, wobei die Streben 40 im wesentlichen senkrecht zum Luftführungskanal 38 angeordnet sind.

Schließlich weist ein Luftführungskanal 41 (Fig. 8) die Einschnürung 37 und eine mit dieser in Wirkverbindung stehende Verstrebung 42 auf, wobei die Verstrebung 42 eine koaxial zu der Einschnürung 37 verschiebbare Nadel 43 ist. Hierbei ist der Querschnitt für den Luftaustritt ringförmig ausgebildet, wobei dieser durch Verschiebung des konischen Kopfes der Nadel 43 zur Einschnürung 37 auch veränderbar ist. Auch hierdurch kann zum einen der Durchtritt von Fremdkörpern mit dem Druckluftstrahl 10 sicher ausgeschlossen werden. Zum anderen begünstigt eine derartige Gestaltung des Luftführungskanals 41 die spätere Ausbildung des Druckluftstrahls 10.

## Patentansprüche

1. Verfahren zur Bekämpfung von Insekten, vorzugsweise Mücken, Fliegen und dergleichen, **dadurch gekennzeichnet,** daß die Insekten stoßartig mit einem endlichen Strahl eines unter Druck stehenden und/oder komprimierten Gases beaufschlagt werden.

2. Verfahren nach Anspruch 1, dadurch gekennzeichnet, daß die Insekten durch einen im wesentlichen Umgebungstemperatur aufweisenden Druckluftstrahl (10) beaufschlagt werden.

3. Verfahren nach Anspruch 1 oder 2, dadurch gekennzeichnet, daß der Druckluftstrahl (10) aus gebündelter Druckluft gebildet wird, wobei die Druckluft zur Ausbildung des Druckluftstrahls (10) derart gebündelt und/oder komprimiert wird, daß der Druckluftstrahl (10) einen definierbaren Wirkungsbereich (11) aufweist.

4. Verfahren nach einem oder mehreren der Ansprüche 1 bis 3, dadurch gekennzeichnet, daß die Druckluft so gelenkt wird, daß der Druckluftstrahl (10) im wesentlichen zylindrisch ist.

5. Verfahren nach einem oder mehreren der Ansprüche 1 bis 4, dadurch gekennzeichnet, daß mit dem Druckluftstrahl (10) die Insekten betäubt werden und anschließend eine konventionelle, insbesondere mechanische, Tötung der Insekten erfolgt.

6. Vorrichtung zur Bekämpfung von Insekten, vorzugsweise Mücken, Fliegen und dergleichen, insbesondere zur Durchführung des Verfahrens nach Anspruch 1, dadurch gekennzeichnet, daß aus einer Druckluftquelle gezielt Druckluft oder dergleichen ableitbar und damit mindestens ein Insekt beaufschlagbar ist, und daß ein Luftführungskanal (36, 38, 41) des Luftaustritts (16, 35) und/oder einer Düse (17) bzw. Verstelldüse (18) für die Druckluft derart ausgebildet ist, daß der Austritt von Fremdkörpern im Druckluftstrahl (10) ausgeschlossen ist.

7. Vorrichtung nach Anspruch 6, dadurch gekennzeichnet, daß der Querschnitt des Luftführungskanals (36, 38, 41) partiell eine Einschnürung (37) und/oder Verstrebung (39, 42) aufweist.

8. Vorrichtung nach Anspruch 6 oder 7, dadurch gekennzeichnet, daß die Druckluftquelle ein mit Druckluft gefüllter Druckluftbehälter, vorzugsweise eine Druckluftflasche (12), ist, daß diesem bzw. dieser ein zum Druckluftaustritt betätigbares Ventil (14) zugeordnet ist, und daß das Ventil (14) mittels eines Abzugs (15) betätigbar ist, der insbesondere ein kurzzeitiges Öffnen des Ventils (14) gestattet.

9. Vorrichtung nach einem oder mehreren der Ansprüche 6 bis 8, dadurch gekennzeichnet, daß das Ventil (14) auf der Druckluftflasche (12) aufgesetzt und der Abzug (15) etwa koaxial zum Ventil (14) und zu der Druckluftflasche (12) beweglich ist, während sich ein Luftaustritt (16) des Ventils (14) vorzugsweise rechtwinklig erstreckt.

10. Vorrichtung nach Anspruch 6 oder 7, dadurch gekennzeichnet, daß die Druckluftquelle derart ausgebildet ist, daß die Druckluft durch einen in einem Zylinder (21) vorschnellenden Kolben (23) erzeugbar ist und daß der Kolben (23) im Zylinder (21) mittels einer Spannvorrichtung gegen eine Druckfeder (25) verschiebbar und bei gespannter Druckfeder (25) mittels eines Abzugs (27) in eine Halteposition arretierbar ist.

11. Vorrichtung nach Anspruch 10, dadurch gekennzeichnet, daß der Abzug (27) schwenkbeweglich an dem Zylinder (21) oder einem Griffelement (31) desselben angeordnet ist, derart, daß eine dem Abzug (27) zugeordnete Haltenase (26) für den Kolben (23) aus dem Zylinder (21) hinausschwenkbar ist.

12. Vorrichtung nach einem oder mehreren der Ansprüche 6 bis 11, dadurch gekennzeichnet, daß die Druckluft über einen Luftaustritt (16, 35) ableitbar ist, daß dem Luftaustritt (16, 35) eine Düse (17) zur Lenkung der Druckluft zu dem Druckluftstrahl (10) zugeordnet ist, wobei die Düse (17) derart ausgebildet ist, daß der Druckluftstrahl (10) infolge der Bündelung bzw. Komprimierung der Druckluft einen im wesentlichen zylinderförmigen Verlauf, insbesondere einen leicht konischen Verlauf, und eine definierte Länge aufweist.

13. Vorrichtung nach Anspruch 12, dadurch gekennzeichnet, daß die Düse (17) zur Ausbildung unterschiedlicher Druckluftstrahlen (10) als Verstelldüse (18) ausgebildet ist.

14. Vorrichtung nach einem oder mehreren der Anspüche 6 bis 13, dadurch gekennzeichnet, daß eine Außenhülle (20) der Verstelldüse (18) zur Verstellung des Druckluftstrahls (10) gegen ein fest mit dem Luftaustritt (16, 35) verbundenes Innenteil (19) vorzugsweise durch Relativdrehung axialverschieblich ist.

## Claims

1. Method for controlling insects, principally mosquitoes, flies and the like, characterized in that the insects are struck suddenly by a finite jet of a pressurized and/or compressed gas.

2. Method according to Claim 1, characterized in that the insects are struck by a compressed-air jet (10) which is essentially at ambient temperature.

3. Method according to Claim 1 or 2, characterized in that the compressed-air jet (10) is formed from directed compressed air, the compressed air for forming the compressed-air jet (10) being directed and/or compressed in such a way that the compressed-air jet (10) has a definable range of action (11).

4. Method according to one or more of Claims 1 to 3, characterized in that the compressed air is guided so that the compressed-air jet (10) is essentially cylindrical.

5. Method according to one or more of Claims 1 to 4, characterized in that the insects are stunned by the compressed-air jet (10), and this is followed by a conventional killing, in particular mechanical killing, of the insects.

6. Device for controlling insects, principally mosquitoes, flies and the like, particularly for carrying out the method according to Claim 1, characterized in that compressed air or the like can be drawn in a deliberate manner from a compressed-air source and at least one insect can be struck by this compressed air, and in that an air delivery channel (36, 38, 41) of the air outlet (16, 35) and/or of a nozzle (17) or adjustable nozzle (18) for the compressed air is designed in such a way that the expulsion of foreign bodies in the compressed-air jet (10) is ruled out.

7. Device according to Claim 6, characterized in that the cross-section of the air delivery channel (36, 38, 41) has a partial constriction (37) and/or a cross-strut (39, 42).

8. Device according to Claim 6 or 7, characterized in that the compressed-air source is a compressed-air container filled with compressed air, preferably a compressed-air cylinder (12), in that this container or cylinder is assigned a valve (14) which can be actuated for expulsion of compressed air, and in that the valve (14) can be actuated by means of a trigger (15) which permits, in particular, a brief opening of the valve (14).

9. Device according to one or more of Claims 6 to 8, characterized in that the valve (14) is placed on top of the compressed-air cylinder (12) and the trigger (15) can be moved approximately coaxial to the valve (14) and to the compressed-air cylinder (12), while an air outlet (16) of the valve (14) preferably extends at a right angle.

10. Device according to Claim 6 or 7, characterized in that the compressed-air source is designed in such a way that the compressed air can be generated by a plunger (23) advancing rapidly in a barrel (21), and in that the plunger (23) in the barrel (21) can be displaced counter to a compression spring (25) by means of a tensioning device and, with the compression spring (25) tensioned, can be locked in a hold position by means of a trigger (27).

11. Device according to Claim 10, characterized in that the trigger (27) is arranged so that it can swivel on the barrel (21) or on a grip element (31) thereof, in such a way that a retainer lug (26), assigned to the trigger (27), for the plunger (23) can be swivelled out from the barrel (21).

12. Device according to one or more of Claims 6 to 11, characterized in that the compressed air can be drawn via an air outlet (16, 35), in that the air outlet (16, 35) is assigned a nozzle (17) for guiding the compressed air to form the compressed-air jet (10), the nozzle (17) being designed in such a way that, as a result of the directing and compressing of the compressed air, the compressed-air jet (10) has an essentially cylindrical configuration, in particular a slightly conical configuration, and a defined length.

13. Device according to Claim 12, characterized in that the nozzle (17) is designed as an adjustable nozzle (18) for the formation of different compressed-air jets (10).

14. Device according to one or more of Claims 6 to 13, characterized in that an outer casing (20) of the adjustable nozzle (18) for adjusting the compressed-air jet (10) is axially displaceable, preferably by means of relative rotation, in relation to an inner part (19) connected in a fixed manner to the air outlet (16, 35).

## Revendications

1. Procédé de lutte contre les insectes, de préférence les moucherons, moustiques, mouches et analogues, caractérisé par le fait que les insectes sont soumis par secousses à un jet limité d'un gaz sous pression et/ou comprimé.

2. Procédé selon la revendication 1, caractérisé par le fait les insectes sont soumis à un jet d'air sous pression (10) présentant sensiblement la température ambiante.

3. Procédé selon la revendication 1 ou 2, caractérisé par le fait que le jet d'air sous pression (10) est constitué d'air sous pression concentré, l'air sous pression destiné à constituer le jet d'air sous pression (10) étant concentré et/ou comprimé de manière que le jet d'air sous pression (10) présente une zone d'action (11) définissable.

4. Procédé selon l'une ou plusieurs des revendications 1 à 3, caractérisé par le fait que l'air sous pression est dirigé de manière que le jet d'air sous pression (10) soit sensiblement cylindrique.

5. Procédé selon l'une ou plusieurs des revendications 1 à 4, caractérisé par le fait que l'on étourdit les insectes avec le jet d'air sous pression (10), puis les insectes sont tués de façon classique en particulier mécaniquement.

6. Dispositif pour lutter contre les insectes, de préférence les moucherons, moustiques, mouches et analogues, en particulier pour la mise en oeuvre du procédé selon la revendication 1, caractérisé par le fait qu'est dérivé, d'une source d'air sous pression, de l'air sous pression et qu'à celui-ci est exposable au moins un insecte, et qu'un canal de guidage d'air (36, 38, 41) de la sortie d'air (16, 35) et/ou d'une buse (17) ou d'une buse de réglage (18) pour l'air sous pression est réalisé de manière que soit exclue la sortie de corps étrangers dans le jet d'air sous pression (10).

7. Dispositif selon la revendication 6, caractérisé par le fait que la section transversale du canal de guidage d'air (36, 38, 41) présente partiellement un étranglement (37) et/ou des entretoises (39, 42).

8. Dispositif selon la revendication 6 ou 7, caractérisé par le fait que la source d'air sous pression est un récipient d'air sous pression rempli d'air sous pression, de préférence une bouteille d'air sous pression (12), qu'à ce récipient ou à cette bouteille est associé une soupape (14) pouvant être actionnée pour la sortie d'air sous pression, et que la soupape (14) est actionnable au moyen d'une détente (15) qui permet en particulier une ouverture brève de la soupape (14).

9. Dispositif selon l'une ou plusieurs des revendications 6 à 8, caractérisé par le fait que la soupape (14) est placée sur la bouteille d'air sous pression (12) et la détente (15) est mobile à peu près coaxialement par rapport à la soupape (14) et à la bouteille d'air sous pression (12), tandis qu'une sortie d'air de la soupape (14) s'étend de préférence à angle droit.

10. Dispositif selon la revendication 6 ou 7, caractérisé par le fait que la source d'air sous pression est réalisée de manière que l'air sous pression puisse être produit au moyen d'un piston (23) se déplaçant dans un cylindre (21), et que le piston (23) est déplaçable dans le cylindre (21) au moyen d'un dispositif tendeur agissant à l'encontre d'un ressort de compression (25) et pouvant, lorsque le ressort de compression (25) est comprimé, être mis en butée en une position de retenue au moyen d'une détente (27).

11. Dispositif selon la revendication 10, caractérisé par le fait que la détente (27) est montée mobile en pivotement sur le cylindre (21) ou un élément de prise (31), de manière qu'un ergot de retenue (26), associé à la détente (27) et destiné au piston (23), puisse être sorti du cylindre (21) par pivotement.

12. Dispositif selon l'une ou plusieurs des revendication 6 à 11, caractérisé par le fait que l'air sous pression peut être prélevé par une sortie d'air (16, 35), qu'à la sortie d'air (16, 35) est associée une buse (17) destinée à diriger l'air sous pression vers le jet d'air sous pression (10), la buse (17) étant réalisée de manière que le jet d'air sous pression (10) ait une allure sensiblement cylindrique suite à la concentration ou à la compression de l'air sous pression, en particulier présente une allure légèrement conique et une longueur définie.

13. Dispositif selon la revendication 12, caractérisé par le fait que la buse (17) est réalisée sous forme de buse réglable (18) pour produire des jets d'air sous pression (10) de caractéristiques différentes.

14. Dispositif selon l'une ou plusieurs des revendication 6 à 13, caractérisé par le fait qu'une enveloppe extérieure (20) de la buse réglable (18) est déplaçable axialement pour produire le réglage du jet d'air sous pression (10), par rapport à une partie intérieure (19) reliée rigidement à la sortie d'air (16, 35), de préférence par un mouvement relatif de rotation.
